# EUROPEAN PATENT APPLICATION

(11) **EP 2 728 723 A1**
(43) Date of publication of application: **07.05.2014**
(21) Application number: 13190330.4
(22) Date of filing: 25.10.2013
(51) Int. Cl.: H02M 1/14, H02M 7/23, H02M 1/42

(54) **Operation of multichannel active rectifier**

(30) Priority: 31.10.2012 US 201213665199
(71) Applicant: Hamilton Sundstrand Corporation, Windsor Locks, CT 06096-1010 (US)
(72) Inventor: Wilhide, Matthew L., Cherry Valley, IL 61016 (US); Courtney, Christopher J., Janesville, WI 53545 (US)
(74) Representative: Hughes, Andrea Michelle

(57) **Abstract**

An active rectifier system that rectifies power supplied to an electrical device includes a load detector to determine an electrical load applied on the active rectifier system by the electrical device. A plurality of active rectifier modules are configured to convert an input alternating current (AC) power into an output direct current (DC) power. Each active rectifier module is operable according to a respective switching signal. A control module is configured to selectively output the switching signal to at least one selected active rectifier module among the plurality of active rectifier modules based on the electrical load.

## Description

### BACKGROUND

The present disclosure is related to rectifiers, and in particular, to a control system for controlling a plurality of active rectifiers.

Active rectifiers are currently used to convert AC power into DC power for driving an electrical device having a varying load, such as a motor on board an aircraft. A single active rectifier may include an active switching element that performs over a large input frequency range, e.g., 2:1, while maintaining a near unity power factor.

An active rectifier circuit may include a boost inductor to provide a steady current source to the active switching element. Based on the output of the boost inductor, the active rectifier performs at the highest power quality, *i*.*e*., operates most efficiently, when the electrical device operates at full load. However, the efficiency of the active rectifier may change as the load of the electrical device varies.

### SUMMARY

According to at least one feature the embodiments, an active rectifier system that rectifies power supplied to an electrical load comprises an output voltage detector to detect an output voltage level of an output signal supplied to the electrical load. The active rectifier system further includes a plurality of active rectifier modules configured to receive an input voltage signal. Each active rectifier module is selectively activated in response to a control signal to convert the input voltage signal into the output voltage. A control module is in electrical communication with the output voltage detector and the plurality of active rectifier modules. The control module is configured to selectively output the control signal to the plurality of active rectifier modules based on the output voltage level.

In another feature of the embodiments, a method of controlling an active rectifier system including a plurality of active rectifier modules comprises receiving a multi-phase input voltage signal to power an electrical device and performing a first signal rectification to convert the multi-phase input voltage signal into a first multi-level output voltage signal output to the electrical device. The method further includes detecting an effective output voltage level realized by the electrical device based on the first multi-level output voltage signal, and performing a second signal rectification to convert the multi-phase input voltage signal into a second multi-level output voltage signal based on the effective output voltage level and outputting the first and second multi-level output voltage signals to increase the effective output voltage level.

In yet another feature of the embodiments, a control module to interleave switching frequencies of a plurality of active rectifier modules comprises a field-programmable gate array to activate at least one active rectifier module and to generate a control signal that operates the at least one active rectifier module according to a switching period. A digital signal processor is in electrical communication with the field-programmable gate array to detect activation of first and second active rectifier modules. The digital signal processor is further configured to control field-programmable gate array to phase-shift the switching times of the first and second active rectifier modules and increase an effective output voltage generated by the first and second active rectifier modules.

### BRIEF DESCRIPTION OF THE DRAWINGS

The subject matter of embodiments of the disclosure is particularly pointed out and distinctly claimed in the claims at the conclusion of the specification. The foregoing and other features of the disclosure are apparent from the following detailed description taken in conjunction with the accompanying drawings in which:

Figure 1 is a block diagram of a multichannel active rectifier system according to an embodiment of the disclosure;

Figures 2A-2C illustrate a series of wave diagrams showing a relationship between a plurality of operating active rectifiers according to an embodiment of the disclosure;

Figure 3 is a schematic diagram of a multichannel active rectifier system according to an embodiment of the disclosure; and

Figure 4 is flow diagram illustrating a method of controlling a plurality of active rectifiers included in a multichannel active rectifier system according to an embodiment of the disclosure.

### DETAILED DESCRIPTION OF THE EMBODIMENTS

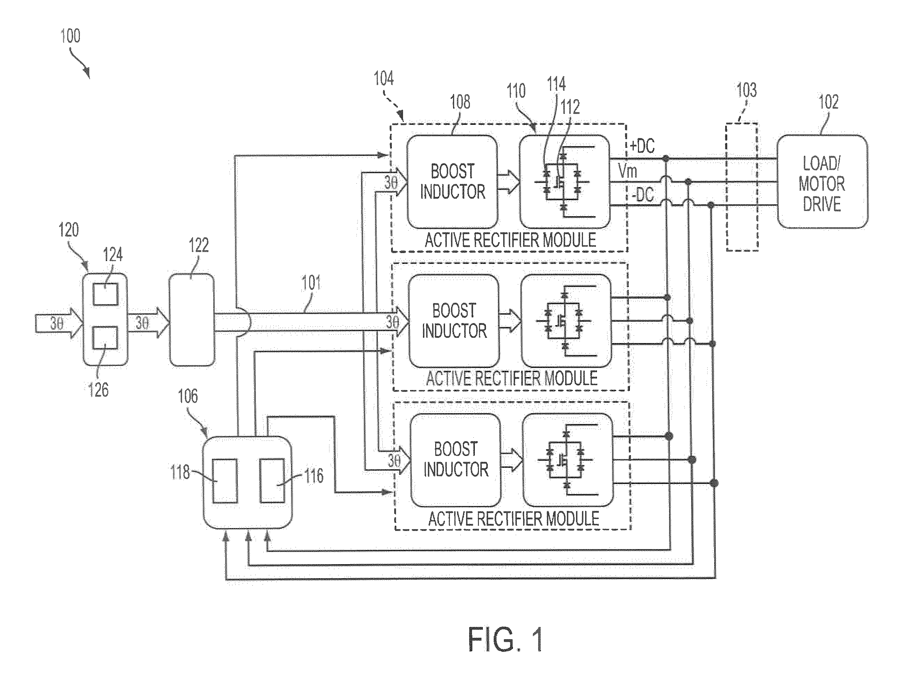

Figure 1 illustrates a general embodiment of a multichannel active rectifier system 100. The multichannel active rectifier system 100 converts a supplied alternating current (AC) power delivered on an AC bus 101 into direct current (DC) power carried by the DC Bus 103 to be used by a DC load 102. The AC power may exist as a three-phase alternating current AC signal (denoted as 30 in Figure 1). The DC power may include a plurality of DC power outputs at the DC bus 103, such as a positive DC power output (+DC), a negative DC power output (-DC) and a mid-point voltage (Vm), i.e., a return voltage, as illustrated in Figure 1. The DC bus load 102, i.e., the electrical load 102 connected to the DC bus 103, may include, for example, a motor. The motor may include a motor drive (not shown) that drives the motor at different speeds. Accordingly, the motor may apply a variable load to the multichannel active rectifier system 100 as the motor drive operates the motor at different speeds. That is, as the operation of the motor varies, i.e., the motor drive varies the speed of the motor, the motor may consume more or less power, thereby varying the load applied to the multichannel active rectifier system 100.

The multichannel active rectifier system 100 further includes a plurality of power stages, i.e., active rectifier modules 104 and a main control module 106 that controls the active rectifier modules 104. In at least one embodiment of the disclosure, the active rectifier modules 104 are electrically connected in parallel with one another, as further illustrated in Figure 1. Each active rectifier module 104 includes a boost inductor 108 connected to a corresponding power switching device 110. The active rectifier modules 104 may be replicated to achieve a desired power/performance configuration, as discussed in greater detail below. The electrical load 102 utilizes the DC power at the DC bus 103 generated by at least one active rectifier module 104 among the plurality of active rectifier modules 104. When AC power is applied to the active rectifier modules 104, the DC bus voltage may have different values. More specifically, when the active rectifier modules 104 are disabled, the DC bus 103 will have a value according to a passive rectification of the AC power. When the active rectifier modules 104 are enabled, the voltage at the DC bus 103 is the voltage generated according to a switching operation of one or more active rectifier modules 104 controlled by the main control module 106. That is, during light load conditions, the power switching device 110 in the active rectifier modules 104 is disabled, which allows passive rectification of the input AC waveform of the AC bus 101. As the power consumed by the electrical load 102 increases, one or more active rectifier modules 104 may be enabled, i.e., the power switching device 110 in a corresponding active rectifier module 104 is enabled, in order to maintain the highest power efficiency point possible. In at least one embodiment, the number of enabled active rectifier modules 104 may be sequentially increased as the power consumed by the electrical load 102 increases. The main control module 106 controls the switching operation of the power switching units 110 corresponding to each enabled active rectifier module 104 to generate the DC output voltage at the DC bus 103. This trend continues until the maximum power point of the multichannel active rectifier system 100 is achieved such that the all the power switching devices 110 of the corresponding active rectifier modules 104 are operating.

More specifically, the main control module 106 is configured to control operation of the plurality of active rectifier modules 104 based on the power and/or a load of the multichannel active rectifier system 100. In at least one embodiment of the disclosure, the main control module 106 may include a field-programmable gate array (FPGA) 116 and a digital signal processor (DSP) 118. The FPGA 116 generates a switching signal that controls the switching of the power switching unit 110 of a respective active rectifier module 104. The DSP 118 determines the power and/or load of the multichannel active rectifier system 100. For example, the DSP 118 may determine the regulated power at the DC bus 103 based on the power consumed by the electrical load 102. The DSP 118 may also determine the power output from each active rectifier module 104 with respect to a maximum power output threshold of each active rectifier module 104.

In at least one embodiment, the DC output voltage at the DC bus 103 may be set to a voltage to be provided to the electrical load 102. The DC output voltage realized by the electrical load 102 may be fed back to the main control module 106. One or more active rectifier modules 104 operate to regulate the DC output voltage at the DC bus 103 once the power drawn from the electrical load 102 exceeds a minimum operating value. The operating value may be calculated based on power measured in the active rectifier modules 104, as discussed in greater detail below. Based on the DC bus voltage, the DSP 118 may output a control signal to the FPGA 116 instructing which active rectifier module 104 to activate among the plurality of active rectifier modules 104. The FPGA 116 receives the control signal and outputs the switching signal corresponding to one or more respective active rectifier modules 104. The switching signal controls the switching operation, i.e., the switching, of the power switching unit 110 such that the DC bus voltage at the DC bus 103 is achieved. Although the DSP 118 has been described as activating one or more active rectifier modules 114, it can be appreciated that the DSP 118 may activate different active rectifier modules 104 at random. For example, in a first operation of the multichannel active rectifier system 100, a first set of active rectifier modules 104 may be activated to convert the AC signal into the DC signal. However, in a second operation of the system 100, a second set of active rectifier modules 104 different from the first set may activated to convert the AC signal into the DC signal. This may prevent over-use of particular active rectifier modules 104, thereby prolonging the life of the system 100.

In addition, it can be appreciated that the DSP 118 may deactivate all of the active rectifier modules 104 when the electrical device 102 applies a light load, *i.e.,* when the load applied by the electrical device is less than a threshold value. Accordingly, the multichannel active rectifier system 100 performs a passive rectification to lower the link voltage. As the load increases, however, the DSP 118 may activate a minimum number of active rectifier modules 114 capable of supplying a sufficient amount of power required by the electrical device 102 as discussed in detail above. Once the maximum power output capability of the minimum number of activated rectifier modules 104 is reached, the DSP 118 outputs a control signal to the FPGA 116 to activate an additional active rectifier module 104.

In an embodiment of the disclosure, the DSP 118 may determine the number of rectifiers modules 104 to activate based on a maximum output threshold of a respective active rectifier module 104. In at least one embodiment, each active rectifier 104 may have a maximum output threshold of 5 kilowatts (kW). The output threshold is not limited, however, to 5 kW. If the DC output voltage realized by the electrical load 102 exceeds a maximum threshold value of the one or more previously activated rectifier modules 104, the DSP 118 may determine that an additional rectifier module 104 should be activated simultaneously with the one or more previously activated active rectifier modules 104. Accordingly, a minimum number of active rectifier modules 104 may be activated such that the active rectifier modules 104 operate near full load capacity more often thereby providing the most efficient power quality performance to the system 100.

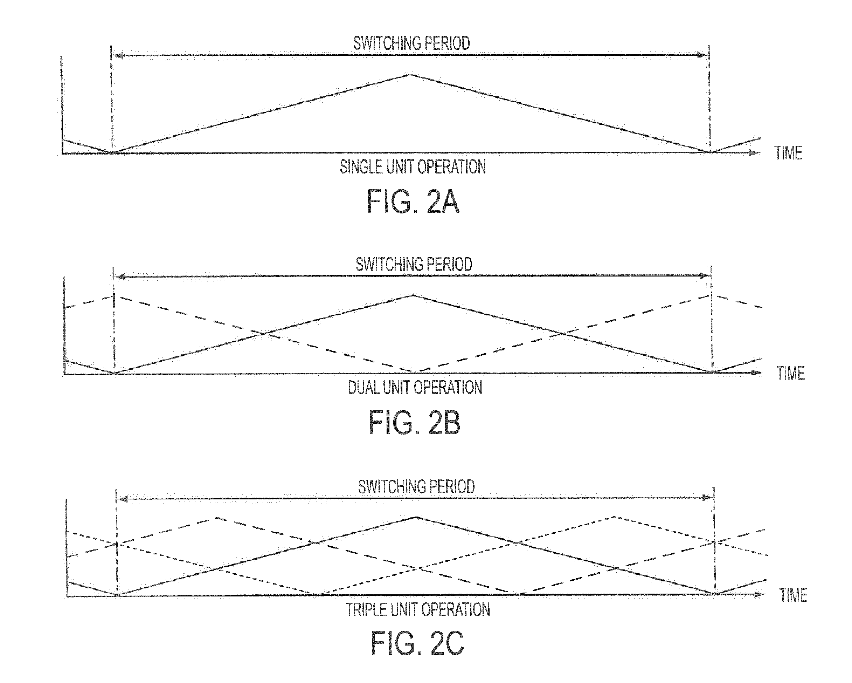

The DSP 118 may further be configured to shift the switching times after two or more active rectifier modules 104 are activated such that the switching frequencies of the active rectifier modules 104 are interleaved. A series of wave diagrams showing a relationship between switching times of a plurality of operating active rectifier modules 104 are illustrated in Figures 2A-2C. The wave diagram of Figure 2A illustrates the switching frequency of a single operating active rectifier module 104. The wave diagram of Figure 2B illustrates the switching frequency of two operating active rectifier modules 104, while the wave diagram of Figure 2C illustrates the switching frequency of three operating active rectifier modules 104. As illustrated in Figures 2A-2C, the switching frequencies are controlled such that each switching frequency may have an inverse relationship with respect to one another. Referring to Figure 2B, for example, the first and second waveforms are shifted 180 degrees with respect to one another.

The DSP 118 may control the FPGA 116 to shift the switching times by adjusting a phase shift of the active rectifier modules 104. For example, if two active rectifier modules 104 are enabled, a first switching period of a first rectifier module 104 may be phase-shifted, *i.e*., shifted in time, with respect to a second switching period of a second rectifier module 104. The DSP 118 may determine the phase shift according to the full switching period (*e*.*g*., 360 degrees) and the number of enabled active rectifier modules 104. That is, the phase-shift between the first and second active rectifier modules 104 may be determined as: 360 degrees/2 enabled active rectifier modules = 180 degrees, as illustrated in Figure 2B. Similarly, the phase-shift between three enabled active rectifier modules 104 may be determined as 360 degrees/3 enabled active rectifier modules = 120 degrees, as illustrated in Figure 2C. Accordingly, the switching frequencies of each enabled active rectifier module 104 among a plurality of active rectifier modules 104 may be interleaved, thereby increasing the effective switching frequency generated by the plurality of enabled active rectifier modules 104. Further, by increasing the effective switching frequency of the plurality of enabled active rectifier modules 104, i.e., during periods of higher power levels, the stability and response time of the system may be improved. That is, as the electrical load 102 draws more power, the effective output voltage realized by the electrical load 102 at the DC bus 103 may be increased. As a result, the effective output voltage provided to the electrical load 102 is maintained at a desired level.

Referring again to Figure 1, the multichannel active rectifier system 100 may further comprise a contactor module 120 and an EMI filter unit 122. The contactor module 120 may include a pre-charge contactor 124 and a main contactor 126. The pre-charge contactor 124 performs a pre-charging operation to control in-rush current during initial charging induced by the DC link voltage. The main contactor 126 is configured to selectively operate in a closed state and an open state. More specifically, the main contactor 126 is closed during the operation of the active rectifier module 104 in response to the pre-charge contactor 124 completing the pre-charging operation. Otherwise, the main contactor 126 is opened in response to disconnecting power to the multichannel active rectifier system 100 and/or if a fault condition, such as overheating, short circuiting, an open circuiting, etc., occurs in the multichannel active rectifier system 100.

The EMI filter unit 122 may be disposed between the contactor module 120 and the main control module 106, and is configured to reduce common mode and differential conducted emissions from the multichannel active rectifier system 100. The EMI filter unit 122 may be a passive or active filter unit, and may include one or more filtering elements, such as a transistor, a MOSFET, a diode, a resistor-capacitor circuit, a resistor-inductor circuit, or a combination thereof. Further, the EMI filter 122 may comprise a single pole filtering element or a multi-pole filtering element. As mentioned above, an effective switching frequency realized by the EMI filter 122 may be increased by interleaving the individual switching frequencies of two or more operating active rectifier modules 104. As a result, the overall dimensions of the EMI filter 122 may be reduced, and switching losses may be decreased.

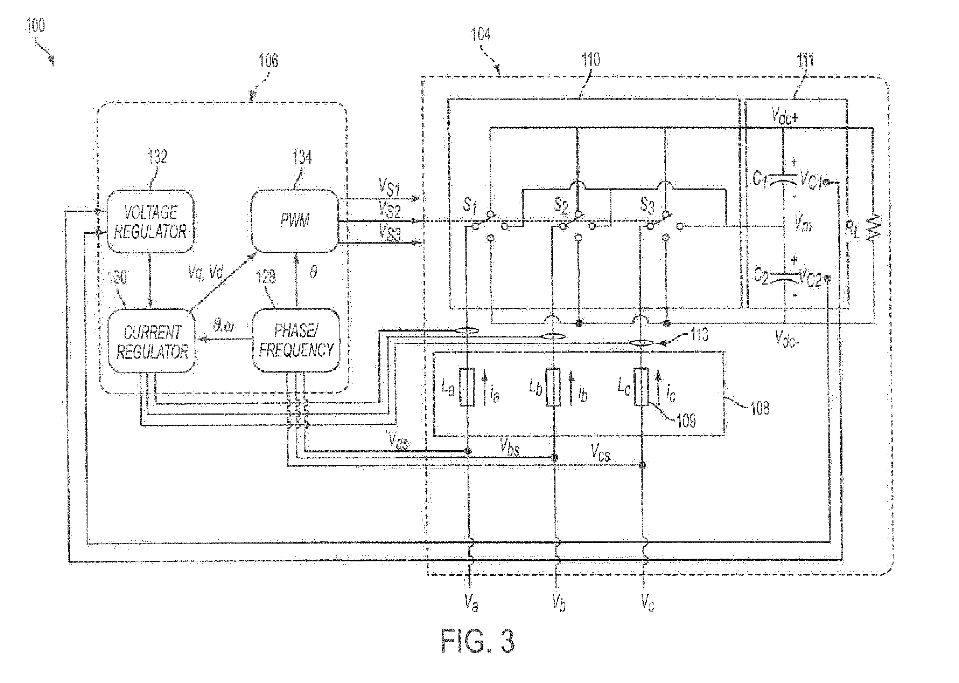

Referring now to Figure 3, a schematic diagram illustrates in greater detail portions of a multichannel active rectifier system 100 according to an embodiment of the disclosure. More specifically, the multichannel active rectifier system 100 includes an active rectifier module 104 and a main control module 106.

The active rectifier module 104 includes the power switching device 110 and the corresponding boost inductor 108. The power switching device 110 may comprises, for example, a multi-level active rectifier that converts three-phase AC power (Vas, Vbs, Vcs) to multi-level DC output power at the DC bus 103. The multi-level DC output power may include a positive DC voltage potential (+DC), a negative DC voltage potential (-DC), and a mid-point voltage (Vm), i.e., a return voltage. The active rectifier module may comprise a plurality of solid-state switching devices illustrated here for the sake of simplicity as single-pole, multiple-throw switches S1, S2, S3 that selectively connect each phase of AC input to one of the plurality of DC outputs. In at least one embodiment, each switch S1, S2, S3 may include a plurality of solid-state switches configured to provide an AC input, *i.e*., Va, Vb, Vc to one of the plurality of DC outputs (*e.g*., +DC, -DC, Vm). The boost inductor 108 may include a plurality of inductors 109 (*i.e.,* La, Lb, Lc) in electrical communication with the main control module 106 to provide a current source. Each inductor La, Lb, Lc provides a current that drives a respective switching S1, S2, S3 of the power switching device 110.

The active rectifier module 104 further includes a voltage sensor 111 and a one or more current sensors 113. The voltage sensor determines the DC output voltage realized by the electrical load 102 (R_{L}), and outputs the DC output voltage to the main control module 106. In at least one embodiment, DC output voltage Vc1, Vc2 may be detected across capacitors C1 and C2, respectively, and fed back to the main control module 106 as illustrated in Figure 3. A current sensor 113 may be disposed between each switch (S1, S2, S3) and corresponding inductor 109 (La, Lb, Lc) to determine the current drawn by the electrical load (R_{L}) 102 thorough each corresponding switch.

The main control module 106 comprises a phase/frequency detector 128, a current regulator 130, a voltage regulator 132, and a power transform module 134. The phase/frequency detector 128 monitors AC input voltage Vas, Vbs, Vcs supplied to active rectifier module 104 and determines AC input phase θ and frequency ω information based on the AC input voltage Vas, Vbs, Vcs. In addition, the phase/frequency detector 128 samples the AC input voltage Vas, Vbs, Vcs at a frequency greater than the frequency of the AC input voltage, *e.g*., ten times greater. Although phase/frequency detector 128 is illustrated as sampling the AC input voltage Vas, Vbs, Vcs, the sampling may be executed by the FPGA 116 or the DSP 118 included in the main control module 106.

The current regulator 130 receives the phase θ and frequency ω information from the phase/frequency detector 128. Based on the phase θ and frequency ω information, the current regulator 130 calculates current feedback signals (Id_Fdbk, Iq_Fdbk) in the active rectifier module. These feedback signals are processed according to a proportional-integral (P-I) algorithm, along with the commanded currents (Id_Cmd, Iq_Cmd) to generate voltage control signals (Vq, Vd) that are output to the power transform module 134.

The power transform module 134 utilizes the phase θ and frequency ω information to convert Vq, Vd provided by current regulator 130 from a two-phase d,q reference frame to a three-phase a,b,c reference frame (*e.g*., Vs1, Vs2, Vs3, representing pulse-width modulated (PWM) duty cycle command signals provided to the switching component, i.e., S1, S2, S3, of the active rectifier module 104. In at least one embodiment, the duty cycle information calculated by the power transform module 134 is synchronized with updated phase information θ provided by phase/frequency detector 128, such that each calculation is made with a most recent estimate of phase information θ from the phase/frequency detector 128.

The voltage regulator 132 monitors the DC output voltages Vc1, Vc2 provided across capacitors C1 and C2, respectively, and compares Vc1, Vc2 to a reference value. The error, *i.e*., difference, between the monitored DC output voltages and the reference value, is provided as an input to the current regulator 130. The current regulator 130 controls a d-axis current (id) to be zero amps, which maintains unity power factor of the system. The q-axis current (iq) is set by the voltage regular 132. Accordingly, the current regulator 130 generates control signals provided to the power transform module 134 to control the DC output voltage at the electrical load 102 (R_{L}). Thus, the currents ia, ib, ic may be shifted in-phase with the monitored voltage as indicated by the phase and frequency information θ, ω provided by phase/frequency detector 128. In particular, phase information θ is employed by the current regulator 130 to transform the monitored currents from the three-phase a,b,c reference frame to a two-phase d,q reference frame. The frequency information ω is utilized by the current regulator 130 to decouple the d,q phase currents as part of d,q proportional-integral (P-I) control loops provided within current regulator 130. In response to these inputs, the current regulator 130 calculates duty cycle voltage commands generated with respect to the two-phase d,q reference frame, Vq, Vd, which are utilized by the power transform module 134. Accordingly, improved accuracy of phase information provided by phase/frequency detector 128 improves the power factor correction provided by current regulator 130, thereby reducing the EMI associated with active rectifier module 104.

As discussed above, the power transform module 134 receives duty cycle command instructions (Vq, Vd) from current regulator 130, and in response generates the duty cycle command signals, such as PWM signals, that are supplied to each of the solid-state switching components, i.e., S1, S2, S3, included power switching device 110. The conversion of duty cycle command instructions Vq, Vd from the two-phase d,q reference frame to the three-phase a,b,c reference frame Vs1, Vs2, Vs3 is based, in part, on the accuracy of the phase information provided by phase/frequency detector 128. By improving the accuracy of the phase θ and frequency ω information, the magnitude of current harmonics (*e.g*., 2^{nd}, 3^{rd}, 4^{th}, etc.) may be reduced, thereby improving EMI performance of the multichannel active rectifier control system 100.

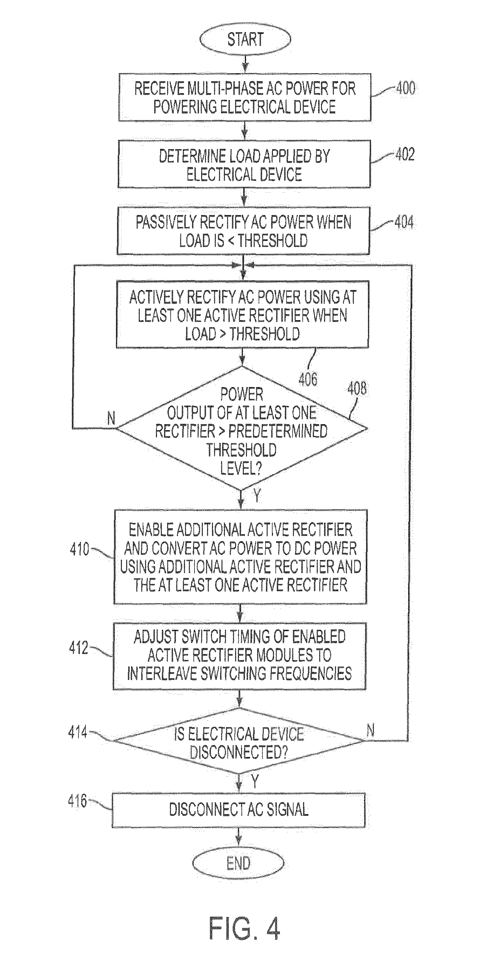

Referring now to Figure 4, a flow diagram illustrates a method of controlling a plurality of active rectifier modules of a multichannel active rectifier system according to an embodiment of the disclosure. At operation 400, multiphase power, such as three-phase AC power, is provided to a plurality of active rectifier modules. In at least one exemplary embodiment, the plurality of active rectifier modules is connected in parallel with one another. After receiving the AC power, the load applied to the system by the electrical device may be determined at operation 402. Initially, the load may be viewed as a light load. That is, the load may be a value that falls below a threshold load value (Th). For example, when the load is a light load, the active rectifier modules may be disabled, and the AC power is passively rectified at operation. However, the light load is not limited to only an initial state of the system. That is, the light load may occur after the system has been operating for a period of time. Further, the load of the system may vary between a light load and a heavy load, i.e., where the load exceeds the load threshold (Th). When the load is determined to exceed the load threshold, at least one active rectifier module is enabled and the AC power is actively rectified at operation 406. At operation 408, a determination is made as to whether the output of the enabled active rectifier module exceeds a threshold value. If the output does not exceed the threshold of the active rectifier module, the method returns to determining the output value at operation 406.

However, if the output exceeds the threshold of the enabled active rectifier module, an additional active rectifier module is activated at operation 410. Accordingly, the three-phase AC voltage signal is converted into the at least one DC output using both the at least one active rectifier module, i.e., the previously enabled active rectifier module, and the additional active rectifier module. At operation 412, the switching times of the at least one active rectifier module and the additional active rectifier module are adjusted such that the respective switching frequencies are interleaved. At operation 414, a determination as to whether the electrical device 414 is disconnected. If the electrical device is not disconnected, the AC power continues to be actively rectified using the enabled active rectifiers at operation 406. Otherwise, the three-phase AC voltage signal is disconnected at operation 416, and the method ends.

While the disclosure is described in detail in connection with various embodiments, it should be readily understood that the present disclosure is not limited to such disclosed embodiments. Rather, the embodiments can be modified to incorporate any number of variations, alterations, substitutions or equivalent arrangements not heretofore described, but which are commensurate with the spirit and scope of the present claims.

## Claims

1. An active rectifier system that rectifies power supplied to an electrical device, the active rectifier system comprising:
a load detector (130, 132) to determine an electrical load (102) applied on the active rectifier system by the electrical device;
a plurality of active rectifier modules (104) configured to convert an input alternating current (AC) power into an output direct current (DC) power, each active rectifier module being enabled in response to a respective switching signal; and
a control module (106) in electrical communication with the load detector and the plurality of active rectifier modules, the control module configured to selectively output the switching signal to at least one selected active rectifier module among the plurality of active rectifier modules based on the electrical load.

2. The active rectifier system of claim 1, wherein the plurality of active rectifier modules are electrically connected in parallel with one another.

3. The active rectifier system of claim 2, wherein the control module outputs an additional switching signal to an additional active rectifier module excluded from the at least one selected active rectifier module based on a comparison between a level of the output DC power generated by the at least one selected active rectifier module and a threshold value of the at least one selected active rectifier module.

4. The active rectifier system of claim 3, wherein the output DC power of the at least one selected active rectifier module ranges from a minimum power to a maximum power based on the electrical load applied by the electrical device.

5. The active rectifier system of claim 4, wherein the control module generates the additional switching signal to operate the additional active rectifier module simultaneously with the at least one selected active rectifier module in response to the DC power of the at least one selected active rectifier module exceeding the maximum power.

6. The active rectifier system of claim 5, wherein each active rectifier module includes a solid-state switching device (110) that switches between on and off states to generate the output DC power.

7. The active rectifier system of claim 6, further comprising a digital processing module (118) in electrical communication with the control module to control switching times of the at least one selected activated active rectifier module and the additional active rectifier module.

8. The active rectifier system of claim 7, wherein the switching times of the at least one selected active rectifier module and the additional active rectifier module have an inverse relationship to one another.

9. The active rectifier system of claim 8, wherein the switching times are phase shifted according to an expression of 360 degrees/(n), where (n) is the number of activated active rectifier modules.

10. A method of controlling an active rectifier system including a plurality of active rectifier modules, comprising:
receiving a multi-phase input alternating current (AC) power;
performing a first power rectification to convert the AC power into a first multi-level output direct current (DC) power to drive an electrical device;
determining an electrical load applied on the active rectifier system by the electrical device; and
performing a second power rectification to convert the multi-phase input AC power into a second multi-level output DC power based on the electrical load and outputting the first and second multi-level output DC powers to maintain an effective output voltage level realized by the electrical device.

11. The method of claim 10, wherein the plurality of active rectifier modules are electrically connected in parallel with one another and the first and second power rectifications are performed simultaneously.

12. The method of claim 11, wherein the performing a second power rectification is based on a comparison between the first multi-level output DC power generated by the first power rectification and a threshold value.

13. The method of claim 12, further comprising phase-shifting the first and second multi-level output DC powers with respect to one another.

14. The method of claim 13, wherein the performing a first power rectification includes rectifying the AC input power according to a first switching period and the performing a second power rectification includes rectifying the AC input power according to a second switching period that is inversely proportional to the first switching period.
